# EUROPEAN PATENT SPECIFICATION

(11) **EP 1 891 744 B1**
(45) Date of publication and mention of the grant of the patent: **20.05.2020**
(21) Application number: 06768889.5
(22) Date of filing: 15.06.2006
(51) Int. Cl.: H04M 1/725

(54) **METHOD AND MOBILE COMMUNICATION TERMINAL FOR PROVIDING FUNCTION OF INTEGRATION MANAGEMENT OF SHORT MESSAGE SERVICE**
VERFAHREN UND MOBILKOMMUNIKATIONSGERÄT ZUR BEREITSTELLUNG EINER FUNKTION ZUR INTEGRATIONSVERWALTUNG EINES KURZNACHRICHTENDIENSTES
METHODE ET TERMINAL MOBILE DE COMMUNICATION ASSURANT LA FONCTION DE GESTION DE L'INTEGRATION DU SERVICE SMS (SHORT MESSAGE SERVICE)

(30) Priority: 15.06.2005 KR 20050051596
(43) Date of publication of application: 27.02.2008
(73) Proprietor: SK Telecom. Co., Ltd., Seoul 100-999 (KR)
(72) Inventor: LEE, Eunbok, 304, Oksan Crystal Apt., Seoul 138-834 (KR); KIM, Hoojong, 7-108, Gaepo 1cha Woosung Apt., Seoul 135-281 (KR); YI, Chaeyong, 301, Sky Ville, 135-33, Seoul 110-280 (KR); PARK, Youngmin, 121-701, JangmimaeulKolon Apt., Gyeonggi-do 463-788 (KR)
(74) Representative: Isarpatent
(86) International application number: PCT/KR2006/002297
(87) International publication number: WO 2006/135204

(56) References cited:
- EP-A2- 0 748 139
- US-A1- 2004 015 548
- US-A1- 2005 015 443
- US-B1- 6 771 974

## Description

### Technical Field

The present invention relates to a mobile communication terminal having a function for integrated management of SMS messages, and more particularly to a mobile communication terminal and method for outputting messages sent to or received from a counterpart terminal altogether in chronological order from oldest to newest on one screen when a user inputs an SMS message in a message integrated management mode and selects the counterpart terminal using a phone number or an integrated management group name stored in a message inbox.

### Background Art

With the development of mobile and wireless technologies, mobile communication terminals, such as cell phones and PCS phones, have been widely supplied and developed to become smaller, sleeker and lighter and to offer various additional functions and services. An exemplary method for displaying group chat sessions on wireless mobile terminals is known from document US 2004/0015548 A1.

In addition to the standard voice function of a telephone, mobile communication terminals can support many additional communication services, such as SMS (Short Message Service) for text messaging and voice message transmission (i.e. voice mail) service for storing speech and transmitting the stored speech data upon a user's request.

The population using a wireless Internet service and a location tracking service for obtaining the current location information of a mobile communication terminal has also rapidly grown in recent years.

As the most popular function used in mobile communication terminals, SMS offers a bi-directional data service that allows users to send or receive text messages of up to 150 characters in length. SMS messages are sent and received almost simultaneously without the use of any additional operator. Since SMS enables convenient visual communication between users, SMS usage continues to grow among people of varying ages, including young children and even elderly people who are not accustomed to obtaining new information.

SMS has been used as a new way of communication alternative to the typical voice communication. Due to its lower transmission cost, SMS is now viewed as a crucial tool for the support of customer service and marketing. SMS is also commonly used to provide subscribed mobile users with useful information such as weather forecasts, news or stock quotes. Users can search various information offered via SMS. SMS is becoming available for a wider range of applications including e-payment and e-commerce. For example, most credit card companies have introduced an SMS service system to inform customers of their credit card transactions.

Younger users tend to use text messaging services more frequently than their elders. Sometimes, they send or receive many text messages to or from one or more people in a short time. In such cases, text messages are used as a chatting means like instant messages. However, conventional inbox and outbox for storing messages in a mobile communication terminal do not support the chatting function.

In other words, conventional mobile communication terminals store sent messages and received messages separately and in sequential order from most recent to oldest. Since the sent or received messages are listed only in order they were sent or received, users cannot easily confirm messages sent to or received from a specific person.

### Disclosure of the Invention

Therefore, the present invention has been made in view of the above-mentioned problems, and it is an object of the present invention to provide a mobile communication terminal and method for outputting messages sent to or received from a counterpart terminal altogether in chronological order from oldest to newest on one screen when a user inputs an SMS message in a message integrated management mode and selects the counterpart terminal using a phone number or an integrated management group name stored in a message inbox.

The invention provides a mobile communication terminal as recited in claim 1 and a method for integrated management of text messages in a mobile communication terminal as recited in claim 7. Advantageous embodiments are set out in the dependent claims.

### Brief Description of the Drawings

The above and other objects, features and advantages of the present invention will be more apparent from the following detailed description taken in conjunction with the accompanying drawings, in which:
FIG. 1 is a block diagram showing the configuration of a mobile communication terminal capable of providing a function for integrated management of text messages according to a preferred embodiment of the present invention;
FIG. 2 is a flowchart showing a process of implementing a function for integrated management of text messages according to a preferred embodiment of the present invention; and
FIGs. 3a to 3c illustrate user interface displays providing a function for integrated management of text messages according to a preferred embodiment of the present invention, wherein FIG. 3a illustrates a user interface display of a list of received messages, FIG. 3b illustrates messages received from a specific user and those sent to the same user, which are displayed on one screen, and FIG. 3c illustrates a user interface display for inputting a text message and message transmission settings.

### Best Mode for Carrying Out the Invention

Hereinafter, a preferred embodiment of the present invention will be described with reference to the accompanying drawings. In the following description of the present invention, a detailed description of known functions and configurations incorporated herein will be omitted when it may make the subject matter of the present invention unclear.

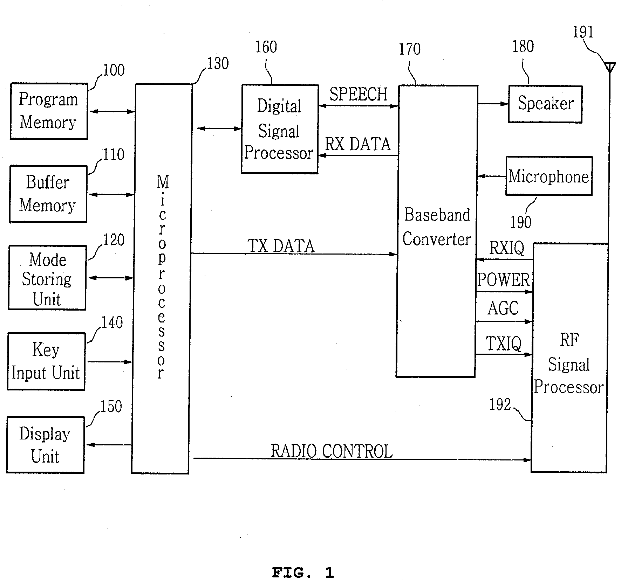

FIG. 1 is a block diagram showing the configuration of a mobile communication terminal capable of providing a function for integrated management of text messages according to a preferred embodiment of the present invention.

Referring to FIG. 1, the mobile communication terminal includes a program memory 100, a buffer memory 110, a mode storing unit 120, a microprocessor 130, a key input unit 140, a display unit 150, a digital signal processor 160, a baseband converter 170, a speaker 180, a microphone 190, an antenna 191 and an RF signal processor 192.

The program memory 100 stores an OS (Operating System) software for real-time processing during the operation of the mobile communication terminal and a signal processing software for implementing signal-processing related functions. Also, the program memory 100 stores a text message integrated management program for outputting messages received from and sent to a specific counterpart terminal altogether in chronological order from oldest to newest when a user inputs a text message in a text message integrated management mode and selects the counterpart terminal using a mobile phone number or an integrated management group name stored in a message inbox 310.

As a software program for implementing a text message integrated management function, the text message integrated management program provides the text message integrated management mode. When a text message is sent under message transmission settings, such as a sender, one or more recipients and an integrated management group name 302 or 312, set in a text message editor 300, the text message integrated management program is implemented so that text messages received from the mobile phone number(s) of the one or more recipients or the integrated management group name 302 or 312, and text messages sent to the one or more recipients can be outputted altogether to the display unit in chronological order from oldest to newest. The integrated management group name 302 or 312 refers to the name of a specific group, such as a study group or a club of people who communicate regularly for a specific purpose and share a common interest. The integrated management group name 302 or 312 can be the name of a chatting room. The integrated management group name 302 or 312 is used to display all messages sent to or received from the members in a specific group on one screen.

Sent messages are messages sent from the user's (sender's) mobile communication terminal to one or more counterpart (recipients') terminals. Received messages are messages that have been received from the counterpart terminals.

The text message integrated management program can be embedded in the program memory 100 during the manufacture of a mobile communication terminal or downloaded from a mobile communication service provider's server through a wireless Internet access.

The buffer memory 110 may use any one of a ROM, an EEPROM, a RAM, a flash memory or a volatile or nonvolatile memory. The buffer memory 110 is mounted on an internal circuit board of the mobile communication terminal. Generally, a ROM stores an operating program and a system program of the microprocessor 130. The ROM can be electrically erased and reprogrammed repeatedly if necessary. Also, the ROM stores program variables and status information generated in the execution of various programs stored in the program memory 100, such as an earphone detection control program.

An EEPROM is an electrically erasable and programmable nonvolatile memory that stores storage data, such as NAM (Number Assignment Module) parameters, phone numbers, names and short messages.

The buffer memory 110 generally serves as a data buffer during the implementation of an operating program of the mobile communication terminal. The buffer memory 110 temporarily stores data inputted through the key input unit 140. Also, the buffer memory 110 stores text or image data received from an external device. When a text message is sent in the text message integrated management mode according to a preferred embodiment of the present invention, the buffer memory 110 stores message transmission settings, such as messages received to or sent from a specific person, a sender, a recipient and an integrated management group name 302 or 312, as data.

The mode storing unit 120 stores the current operating mode of the mobile communication terminal as selected through the key input unit 140 using a state flag (0, 1, 2, ...). The microprocessor 130 assigns a unique state flag .to each mode in order to identify different modes of the mobile communication terminal, such as reception mode, transmission mode, storage mode, search mode, call mode and text message integrated management mode, and updates the mode storing unit 120. Particularly, the mode storing unit 120 stores the text message integrated management mode using a state flag according to a preferred embodiment of the present invention.

The microprocessor 130 controls the overall operation of the mobile communication terminal so that a communication protocol can be processed according to the defined protocol for network and data, referring to the state flags stored in the mode storing unit 120. Particularly, the microprocessor 130 controls the mobile communication terminal to send a text message to one or more recipients according to the message transmission settings made in the text message editor 300 or to receive a reply text message from the one or more recipients and store it. In addition, under the control of the microprocessor 130, messages sent to or received from a specific phone number or integrated management group name 302 or 312 in the message inbox 310 are outputted altogether in chronological order to the display unit of the mobile communication terminal.

When additional text messages are sent to or received from a specific phone number or integrated management group name 302 or 312 stored in the message inbox 310, the microprocessor 130 adds those messages to the list (or history) of messages sent to or received from the specific phone number or group name 302 or 312 so that the messages can be outputted altogether to the display unit.

When the user selects two or more phone numbers or an integrated management group name stored in the message inbox 310 and presses a key to send an inputted text message, the microprocessor 130 controls the mobile communication terminal to send the text message simultaneously to multiple recipients of the selected phone numbers or integrated management group name.

The key input unit 140 is provided with a plurality of alphanumeric keys, a send key, an end key and other function keys for dialing, selecting a menu or inputting a request. The user can select the text message integrated management mode and operate the text message editor 300 by using the keys on the key input unit 140, such as alphanumeric keys, function keys and direction keys. The key input unit 140 serves as a data input means when the user inputs a text message and selects one or more options (for example, a sender and a recipient) in the text message editor 300. The options include the sender's name/phone number, recipient's phone number, integrated management group name 302 or 312, transmission speed (normal, slow or fast), attached file and data inputted in a storage option.

The display unit 150 displays the operational status of the mobile communication terminal, including radio signal strength, battery charge level, current date and time of day. According to a preferred embodiment of the present invention, when the user selects a specific phone number or integrated management group name 302 or 312, the display unit 150 outputs messages sent to or received from the selected phone number or group name altogether. The display unit 150 also outputs a user interface display of items, such as storage options, sender, recipient, integrated management group name, text message editor, file attachment and transmission speed.

The digital signal processor ("DSP") 160 implements an audio data processing function that encodes or decodes audio data received from or transmitted to the baseband converter 170. The DSP 160 also implements an equalizer function for removing noise in multiple paths. In addition, the DSP 160 receives message data (RX DATA) from the baseband converter 170.

The baseband converter 170 converts signals received from or sent to the speaker 180, microphone 190 or RF signal processor 192 into baseband signals. The baseband converter 170 performs both analog-to-digital conversion and digital-to-analog conversion. The baseband converter 170 converts audio data received from the DSP 160 into an audio signal and outputs the audio signal to the speaker 180. Also, the baseband converter 170 converts an audio signal inputted from the microphone 190 into audio data and outputs the audio data to the DSP 160.

In addition, the baseband converter 170 converts transmitted message data (TX DATA) inputted from the microprocessor 130 into a transmitted message signal (TXIQ) and outputs the signal to the RF signal processor 192. It also converts a received message signal (RXIQ) inputted from the RF signal processor 192 into received message data (RX DATA) which will be outputted to the DSP 160. The baseband converter 170 automatically controls gain of the power of the RF signal processor 192.

The speaker 180 converts an audio signal outputted from the baseband converter 170 into audible sound and outputs the sound. Also, it converts speech inputted through the microphone 190 into an audio signal.

The antenna 191 transmits an RF signal over the air, and transfers an RF signal received over the air to the RF signal processor 192.

The RF signal processor 192 converts a received message signal into an RF (Radio Frequency) signal and outputs the signal to the antenna 191. Also, the RF signal processor 192 converts an RF signal applied from the antenna 191 into a received message signal (RXIQ) and outputs the signal to the baseband converter 170.

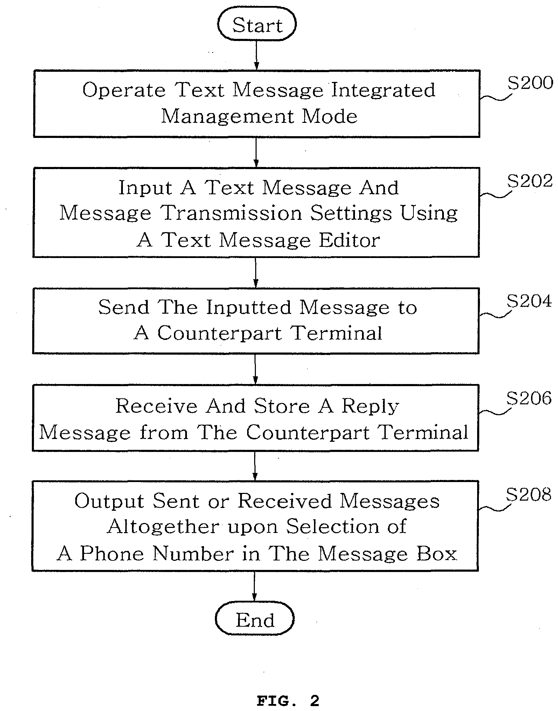

FIG. 2 is a flowchart showing a process of implementing a function for integrated management of text messages according to a preferred embodiment of the present invention.

It is assumed that a text message integrated management program is embedded in the mobile communication terminal.

A user may select the text message integrated management mode under a text message menu (S200). In the text message integrated management mode, text messages sent to or received from a specific phone number or integrated management group name 302 or 312 are integrated and outputted altogether in chronological order. The text message integrated management mode is different from a conventional text message interface mode that displays only sent messages or received messages in chronological order according to the user's selection of message inbox or outbox. The conventional mode does not classify the sent or received messages by sender or recipient. When the text message integrated management mode is selected, the text message editor 300 is activated so that the user can enter a text message and input various message transmission settings, such as a sender and one or more recipients, necessary for the integrated management of text messages. When the user wishes to send the text message to multiple recipients under a specific group name (like a group name in a chatting room), the integrated management group name 302 or 312 should be inputted and stored (S202). Then the text message is sent to a counterpart terminal or terminals (S204).

Sent messages are messages sent from the user's (sender's) mobile communication terminal to one or more counterpart (recipients') terminals. Received messages are messages that have been received from the counterpart terminals. Counterpart terminals can be one or more.

Although the text message editor 310 according to a preferred embodiment of the present invention is configured to input and store one or more recipients of a text message during the message transmission settings, it is also possible to input one or more recipients in a message recipient item after inputting the text message.

The text message editor 310 contains items, such as message edit, receiver, integrated management group name, storage option, file attachment and transmission speed. The text message editor 310 is configured to enable the user to input both a text message and message transmission settings at the same time. If necessary, however, the input of message transmission settings can be separated from the text message input process. Also, it is possible to add further items of message transmission settings to the text message editor 310.

When a reply text message is received from the counterpart terminal (at least one), the mobile communication terminal stores the received message in the message inbox 310 (S206).

The user may open the message inbox 310 and select a specific phone number or a specific integrated management group name. For example, when the user selects a phone number of a person named "Hong Gildong" in the message inbox 310, all the messages sent to or received from that person are integrated and outputted altogether to the display unit in chronological order from oldest to newest. If additional messages are exchanged between the user and Hong Gildong, those messages will be added to the previously stored list of messages sent to or received from Hong Gildong so that all the messages can be outputted to one screen like a chatting dialogue between the user and Hong Gildong (S208).

When the user selects two or more phone numbers or an integrated management group name 302 or 312 stored in the message inbox 310 and presses a key to send an inputted text message, the text message will be sent simultaneously to multiple recipients of the selected phone numbers or integrated management group name 302 or 312.

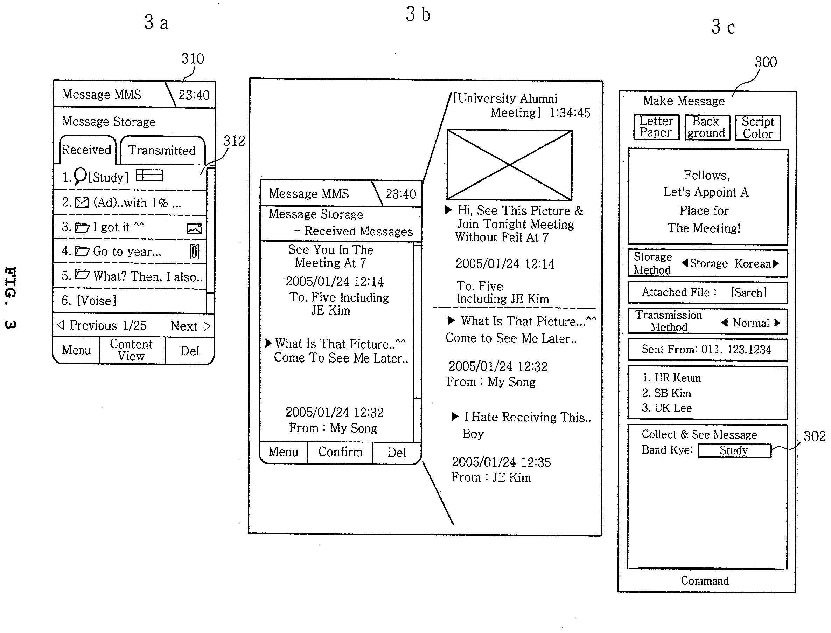

FIGs. 3a to 3c illustrate user interface displays providing a function for integrated management of text messages according to a preferred embodiment of the present invention, wherein FIG. 3a illustrates a user interface display of a list of received messages, FIG. 3b illustrates an integrated display of messages sent to or received from a specific person on one screen, and FIG. 3c illustrates a user interface display for inputting a text message and message transmission settings.

FIG. 3a illustrates a list of received messages stored in the message inbox 310 under a specific phone number or an integrated management group name 302 or 312. FIG. 3b illustrates messages displayed when an integrated management group name of "Daeding" is selected in the message inbox 310. More specifically, FIG. 3b shows a text message sent by the user to six recipients and two reply messages received from two of the six recipients. The sent and received messages are outputted altogether in chronological order on one screen.

FIG. 3c illustrates a user interface display for inputting a text message and message transmission settings using the text message editor 310. The user can select the message edit of the text message editor 310 to input a text message, the sender's phone number and one or more recipients. When the text message will be sent to multiple recipients under a specific group name, the integrated management group name 302 or 312 should also be inputted for the integrated management of messages. Then the user can send the text message to the counterpart terminal (s) . The integrated management group name 302 or 312 can be inputted in a "message collection" item in FIG. 3c.

For example, when an integrated management group name "study" is inputted, messages exchanged between the user and the (six) members of the study group are displayed altogether in chronological order on one screen, thereby providing a chatting-like function.

The text message editor 310 according to a preferred embodiment of the present invention contains items, such as message edit, receiver, integrated management group name, storage option, file attachment (file search) and transmission speed (normal, slow or fast). It is possible to input both a text message and message transmission settings in the text message editor 310.

While this invention has been described in connection with what is presently considered to be the most practical and preferred embodiment, it is to be understood that the present invention is not limited to the disclosed embodiment and the drawings, but, on the contrary, it is intended to cover various modifications and variations within the scope of the appended claims.

### Industrial Applicability

As explained above, the present invention provides a text message integrated management function for integrating messages sent to or received from a specific counterpart terminal and displaying the messages altogether in chronological order on one screen. The function enables a user to easily check the history of messages frequently exchanged with one or more friends, study group students or club members.

According to the present invention, a user can input a text message and set message transmission options using the text message editor. When the user selects two or more phone numbers or a specific integrated management group name stored in the message inbox and presses a key to send the inputted text message, the text message is sent simultaneously to multiple recipients of the selected phone numbers or integrated management group name, which eliminates the need to repeatedly send the message to each recipient.

## Claims

1. A mobile communication terminal capable of outputting messages sent to or received from a counterpart terminal altogether in chronological order from oldest to newest, which comprises:
a key input unit (140) provided with a plurality of alphanumeric keys, a send key, an end key and other function keys for dialing, selecting a menu or inputting a request, and serving as a data input means for selecting a text message integrated management mode and activating a text message editor (300) to input a text message and to select and store message transmission settings;
a display unit (150) for displaying the operational status of the mobile communication terminal, including radio signal strength, battery charge level and current date/time, and displaying a user interface for entering the text message integrated management mode, outputting the messages sent to or received from, in compliance with a short message service (SMS) protocol, the counterpart terminal altogether and inputting the message transmission settings;
a memory (100) having a text message integrated management program that enables a user to input and store a text message and message transmission settings, including a sender and at least one recipient, using the text message editor (300) in the text message integrated management mode and to send the inputted text message to the at least one recipient, and that outputs messages sent to or received from the at least one recipient altogether in chronological order when a reply text message is received from the at least one recipient and added to a list of received messages stored in a message inbox (310), wherein said list of received messages includes phone numbers or integrated management group names (302, 312) which the user inputs, and the sending and receiving of text messages is performed in compliance with the SMS protocol, wherein the text message integrated management program enables the user to input a text message and message transmission settings at the same time; and
a microprocessor (130) for controlling the mobile communication terminal to process data transmission or reception according to a defined communication protocol, implementing the text message integrated management program stored in the memory (100) so as to output an integrated history of messages sent to or received from the counterpart terminal.

2. The mobile communication terminal according to claim 1, wherein a specific one of said phone numbers is inputted in a recipient item of message transmission settings in the text message editor (300) when the text message is sent to one recipient.

3. The mobile communication terminal according to claim 1, wherein a specific one of said integrated management group names (302, 312) is inputted in a recipient item of message transmission settings in the text message editor (300) when the text message is sent to one or more recipients under the specific integrated management group name (302, 312).

4. The mobile communication terminal according to claim 1, wherein said text message editor (300) includes a message edit item, a sender item, a recipient item and an integrated management group name item.

5. The mobile communication terminal according to claim 1, wherein said microprocessor (130) adds any further messages sent to or received from a specific phone number or integrated management group name (302, 312) stored in the message inbox (310) to the previous history of messages sent to or received from the specific phone number or group name (302, 312) so that all the messages can be integrated and outputted altogether to the display unit (150).

6. The mobile communication terminal according to claim 1, wherein said microprocessor (130) detects when the user selects two or more phone numbers or an integrated management group name (302, 312) stored in the message inbox (310) and presses a key to send an inputted text message, and controls the mobile communication terminal to send the text message simultaneously to the multiple recipients of the selected phone numbers or integrated management group name (302, 312) .

7. A method for integrated management of text messages in a mobile communication terminal, which comprises the steps of:
(a) allowing a user to input a text message through a text message editor (300) and select one or more options for message transmission in order to input option data and message transmission settings, wherein the user can input the text message and message transmission settings at the same time;
(b) sending the inputted text message to a counterpart terminal, and receiving a reply text message from the counterpart terminal, the sending and the receiving of text messages being performed in compliance with a short message service (SMS) protocol; and
(c) detecting when the user selects a specific phone number or integrated management group name (302, 312) from a list of received messages stored in the message inbox (310), and displaying messages sent to or received from, in compliance with the SMS protocol, the selected phone number or integrated management group name (302, 312) altogether on one screen in chronological order, wherein said list of received messages includes phone numbers or integrated management group names (302, 312) which the user inputs.

8. The method according to claim 7, further comprising the step of: (d) adding any further messages sent to or received from a specific phone number or integrated management group name (302, 312) stored in the message inbox (310) to the previous history of messages sent to or received from the specific phone number or group name (302, 312) so that all the messages can be integrated and outputted altogether.

9. The method according to claim 7, wherein said step (b) includes: detecting when the user selects two or more phone numbers or an integrated management group name (302, 312) stored in the message inbox (310) and presses a key to send an inputted text message; and sending the text message simultaneously to the multiple recipients of the selected phone numbers or integrated management group name (302, 312).

## Patentansprüche

1. Mobilkommunikationsendgerät, das in der Lage ist, Nachrichten, die an ein Gegenstellen-Endgerät gesendet oder von einem Gegenstellen-Endgerät empfangen werden, allesamt in chronologischer Folge von der ältesten zur neuesten auszugeben, und das Folgendes umfasst:
eine Tasteneingabeeinheit (140), die mit mehreren alphanumerischen Tasten, einer Sendetaste, einer Endetaste und anderen Funktionstasten zum Wählen von Telefonnummern, Auswählen eines Menüs oder Eingeben einer Anforderung versehen ist und als ein Dateneingabemittel zum Auswählen eines integrierten Verwaltungsmodus für Textnachrichten und zum Aktivieren eines Textnachrichteneditors (300) zum Eingeben einer Textnachricht und zum Auswählen und Speichern von Nachrichtenübertragungseinstellungen dient;
eine Anzeigeeinheit (150) zum Anzeigen des Betriebsstatus des Mobilkommunikationsendgerätes, einschließlich Funksignalstärke, Batterieladezustand und aktuelles Datum/Uhrzeit, und zum Anzeigen einer Benutzerschnittstelle zum Eintreten in den integrierten Verwaltungsmodus für Textnachrichten, zum Ausgeben der Nachrichten, die allesamt gemäß einem SMS-Protokoll *(Short Message Service)* an das Gegenstellen-Endgerät gesendet oder von dem Gegenstellen-Endgerät empfangen werden, und zum Eingeben der Nachrichtenübertragungseinstellungen;
einen Speicher (100), der ein integriertes Verwaltungsprogramm für Textnachrichten aufweist, das es einem Benutzer ermöglicht, eine Textnachricht und Nachrichtenübertragungseinstellungen, einschließlich eines Absenders und mindestens eines Empfängers, unter Verwendung des Textnachrichteneditors (300) in dem integrierten Verwaltungsmodus für Textnachrichten einzugeben und zu speichern und die eingegebene Textnachricht an den mindestens einen Empfänger zu senden, und das Nachrichten, die an den mindestens einen Empfänger gesendet oder von dem mindestens einen Empfänger empfangen werden, allesamt in chronologischer Folge ausgibt, wenn eine Antworttextnachricht von dem mindestens einen Empfänger empfangen wird und einer Liste von empfangenen Nachrichten hinzugefügt wird, die in einem Nachrichteneingangsbriefkasten (310) gespeichert sind, wobei die Liste der empfangenen Nachrichten Telefonnummern oder integrierte Verwaltungsgruppennamen (302, 312) enthält, die der Benutzer eingibt, und das Senden und Empfangen von Textnachrichten gemäß dem SMS-Protokoll durchgeführt wird, wobei das integrierte Verwaltungsprogramm für Textnachrichten es dem Benutzer ermöglicht, eine Textnachricht und Nachrichtenübertragungseinstellungen gleichzeitig einzugeben; und
einen Mikroprozessor (130) zur Steuerung des Mobilkommunikationsendgerätes, um das Senden oder Empfangen von Daten gemäß einem definierten Kommunikationsprotokoll zu verarbeiten, wobei das in dem Speicher (100) gespeicherte integrierte Verwaltungsprogramm für Textnachrichten implementiert wird, um einen integrierten Verlauf der an das Gegenstellen-Endgerät gesendeten oder von dem Gegenstellen-Endgerät empfangenen Nachrichten auszugeben.

2. Mobilkommunikationsendgerät nach Anspruch 1, wobei eine bestimmte der Telefonnummern in einen Empfänger-Listenpunkt der Nachrichtenübertragungseinstellungen in dem Textnachrichteneditor (300) eingegeben wird, wenn die Textnachricht an einen einzelnen Empfänger gesendet wird.

3. Mobilkommunikationsendgerät nach Anspruch 1, wobei ein spezifischer der integrierten Verwaltungsgruppennamen (302, 312) in einen Empfänger-Listenpunkt von Nachrichtenübertragungseinstellungen in dem Textnachrichteneditor (300) eingegeben wird, wenn die Textnachricht an einen oder mehrere Empfänger unter dem spezifischen integrierten Verwaltungsgruppennamen (302, 312) gesendet wird.

4. Mobilkommunikationsendgerät nach Anspruch 1, wobei der Textnachrichteneditor (300) ein Nachrichteneditier-Listenelement, ein Sender-Listenelement, ein Empfänger-Listenelement und ein integriertes Verwaltungsgruppennamen-Listenelement umfasst.

5. Mobilkommunikationsendgerät nach Anspruch 1, wobei der Mikroprozessor (130) alle weiteren Nachrichten, die an eine bestimmte Telefonnummer oder einen bestimmten integrierten Verwaltungsgruppennamen (302, 312) gesendet oder von einer bestimmten Telefonnummer oder einem bestimmten integrierten Verwaltungsgruppennamen empfangen werden, die in dem Nachrichteneingang (310) gespeichert sind, dem bisherigen Verlauf von Nachrichten, die an eine bestimmte Telefonnummer oder einen bestimmten integrierten Verwaltungsgruppennamen (302, 312) gesendet oder von einer bestimmten Telefonnummer oder einem bestimmten integrierten Verwaltungsgruppennamen empfangen werden, hinzufügt, so dass alle Nachrichten allesamt integriert und an die Anzeigeeinheit (150) ausgegeben werden können.

6. Mobilkommunikationsendgerät nach Anspruch 1, wobei der Mikroprozessor (130) detektiert, wenn der Benutzer zwei oder mehr Telefonnummern oder einen integrierten Verwaltungsgruppennamen (302, 312), die in dem Nachrichteneingang (310) gespeichert sind, auswählt und eine Taste drückt, um eine eingegebene Textnachricht zu senden, und das Mobilkommunikationsendgerät veranlasst, die Textnachricht gleichzeitig an die mehreren Empfänger der ausgewählten Telefonnummern oder des integrierten Verwaltungsgruppennamens (302, 312) zu senden.

7. Verfahren zur integrierten Verwaltung von Textnachrichten in einem Mobilkommunikationsendgerät, umfassend folgende Schritte:
(a) Erlauben, dass ein Benutzer eine Textnachricht über einen Textnachrichteneditor (300) eingibt und eine oder mehrere Optionen für eine Nachrichtenübertragung auswählt, um Optionsdaten und Nachrichtenübertragungseinstellungen einzugeben, wobei der Benutzer die Textnachricht und die Nachrichtenübertragungseinstellungen gleichzeitig eingeben kann;
(b) Senden der eingegebenen Textnachricht an ein Gegenstellen-Endgerät und Empfangen einer Antworttextnachricht von dem Gegenstellen-Endgerät, wobei das Senden und Empfangen von Textnachrichten gemäß einem SMS-Protokoll *(Short Message Service)* erfolgt; und
(c) Detektieren, wenn der Benutzer eine bestimmte Telefonnummer oder einen bestimmten integrierten Verwaltungsgruppennamen (302, 312) aus einer Liste empfangener Nachrichten, die in dem Nachrichteneingang (310) gespeichert sind, auswählt, und Anzeigen von Nachrichten, die gemäß dem SMS-Protokoll an die ausgewählte Telefonnummer oder den ausgewählten integrierten Verwaltungsgruppennamen (302, 312) gesendet oder von der ausgewählten Telefonnummer oder von dem ausgewählten integrierten Verwaltungsgruppennamen empfangen werden, allesamt auf einem Bildschirm in chronologischer Folge, wobei die Liste empfangener Nachrichten Telefonnummern oder integrierte Verwaltungsgruppennamen (302, 312) enthält, die der Benutzer eingibt.

8. Verfahren nach Anspruch 7, des Weiteren umfassend folgende Schritte: (d) Hinzufügen weiterer Nachrichten, die an eine bestimmte Telefonnummer oder einen bestimmten integrierten Verwaltungsgruppennamen (302, 312) gesendet oder von einer bestimmten Telefonnummer oder einem bestimmten integrierten Verwaltungsgruppennamen empfangen werden, die in dem Nachrichteneingang (310) gespeichert sind, zu dem bisherigen Verlauf von Nachrichten, die an eine bestimmte Telefonnummer oder einen bestimmten integrierten Verwaltungsgruppennamen (302, 312) gesendet oder von einer bestimmten Telefonnummer oder einem bestimmten integrierten Verwaltungsgruppennamen empfangen werden, so dass alle Nachrichten allesamt integriert und ausgegeben werden können.

9. Verfahren nach Anspruch 7, wobei Schritt (b) Folgendes umfasst:
Detektieren, wenn der Benutzer zwei oder mehr Telefonnummern oder einen integrierten Verwaltungsgruppennamen (302, 312) auswählt, die im Nachrichteneingang (310) gespeichert sind, und eine Taste drückt, um eine eingegebene Textnachricht zu senden; und
gleichzeitiges Senden der Textnachricht an die mehreren Empfänger der ausgewählten Telefonnummern oder des ausgewählten integrierten Verwaltungsgruppennamens (302, 312) .

## Revendications

1. Terminal de communication mobile capable de fournir en sortie des messages envoyés à ou reçus depuis un terminal homologue tous ensemble par ordre chronologique du plus ancien au plus récent, qui comprend :
une unité de saisie à touches (140) pourvue d'une pluralité de touches alphanumériques, d'une touche envoyer, d'une touche fin et d'autres touches de fonction pour numéroter, sélectionner un menu ou saisir une demande, et servant de moyens de saisie de données pour sélectionner un mode de gestion intégrée de message texte et activer un éditeur de message texte (300) pour saisir un message texte et pour sélectionner et stocker des réglages de transmission de message ;
une unité d'affichage (150) pour afficher le statut opérationnel du terminal de communication mobile, incluant une intensité de signal radio, un niveau de charge de batterie et une date/heure actuelle, et afficher une interface utilisateur pour entrer dans le mode de gestion intégrée de message texte, fournir en sortie les messages envoyés à ou reçus depuis, conformément à un protocole de service de mini-message *(Short Message Service* - SMS), le terminal homologue tous ensemble et saisir les réglages de transmission de message ;
une mémoire (100) ayant un programme de gestion intégrée de message texte qui permet à un utilisateur de saisir et de stocker un message texte et des réglages de transmission de message, incluant un expéditeur et au moins un destinataire, à l'aide de l'éditeur de message texte (300) dans le mode de gestion intégrée de message texte et d'envoyer le message texte saisi à l'au moins un destinataire, et qui fournit en sortie des messages envoyés à ou reçus depuis l'au moins un destinataire tous ensemble par ordre chronologique lorsqu'un message texte de réponse est reçu depuis l'au moins un destinataire et ajouté à une liste de messages reçus stockés dans une boîte de réception de messages (310), dans lequel ladite liste de messages reçus inclut des numéros de téléphone ou des noms de groupe de gestion intégrée (302, 312) que l'utilisateur saisit, et l'envoi et la réception de messages textes sont réalisés conformément au protocole SMS, dans lequel le programme de gestion intégrée de message texte permet à l'utilisateur de saisir un message texte et des réglages de transmission de message en même temps ; et
un microprocesseur (130) pour commander le terminal de communication mobile pour traiter une transmission ou une réception de données selon un protocole de communication défini, implémenter le programme de gestion intégrée de message texte stocké dans la mémoire (100) de façon à fournir en sortie un historique intégré de messages envoyés au ou reçus depuis le terminal homologue.

2. Terminal de communication mobile selon la revendication 1, dans lequel un numéro spécifique desdits numéros de téléphone est saisi dans un élément de destinataire de réglages de transmission de message dans l'éditeur de message texte (300) lorsque le message texte est envoyé à un destinataire.

3. Terminal de communication mobile selon la revendication 1, dans lequel un nom spécifique desdits noms de groupe de gestion intégrée (302, 312) est saisi dans un élément de destinataire de réglages de transmission de message dans l'éditeur de message texte (300) lorsque le message texte est envoyé à un ou plusieurs destinataires sous le nom de groupe de gestion intégrée (302, 312) spécifique.

4. Terminal de communication mobile selon la revendication 1, dans lequel ledit éditeur de message texte (300) inclut un élément d'édition de message, un élément d'expéditeur, un élément de destinataire et un élément de nom de groupe de gestion intégrée.

5. Terminal de communication mobile selon la revendication 1, dans lequel ledit microprocesseur (130) ajoute tout message supplémentaire envoyé à ou reçu depuis un numéro de téléphone ou un nom de groupe de gestion intégrée (302, 312) spécifique stocké dans la boîte de réception de messages (310) à l'historique précédent de messages envoyés à ou reçus depuis le numéro de téléphone ou le nom de groupe (302, 312) spécifique de sorte que tous les messages puissent être intégrés et fournis en sortie tous ensemble à l'unité d'affichage (150).

6. Terminal de communication mobile selon la revendication 1, dans lequel ledit microprocesseur (130) détecte le moment où l'utilisateur sélectionne deux numéros de téléphone ou plus ou un nom de groupe de gestion intégrée (302, 312) stocké dans la boîte de réception de messages (310) et appuie sur une touche pour envoyer un message texte saisi, et commande le terminal de communication mobile pour envoyer le message texte simultanément aux multiples destinataires des numéros de téléphone ou du nom de groupe de gestion intégrée (302, 312) sélectionnés.

7. Procédé de gestion intégrée de messages textes dans un terminal de communication mobile, qui comprend les étapes de :
a) autorisation d'un utilisateur à saisir un message texte par le biais d'un éditeur de message texte (300) et sélectionner une ou plusieurs options de transmission de message afin de saisir des données d'option et des réglages de transmission de message, dans lequel l'utilisateur peut saisir le message texte et des réglages de transmission de message en même temps ;
b) envoi du message texte saisi à un terminal homologue, et réception d'un message texte de réponse depuis le terminal homologue, l'envoi et la réception de messages texte étant réalisés conformément à un protocole de service de mini-message *(Short Message Service) -* SMS) ; et
c) détection du moment où l'utilisateur sélectionne un numéro de téléphone ou un nom de groupe de gestion intégrée (302, 312) spécifique dans une liste de messages reçus stockés dans la boîte de réception de messages (310), et affichage de messages envoyés à ou reçus depuis, conformément au protocole SMS, le numéro de téléphone ou le nom de groupe de gestion intégrée (302, 312) sélectionné tous ensemble sur un écran par ordre chronologique, dans lequel ladite liste de messages reçus inclut des numéros de téléphone ou des noms de groupe de gestion intégrée (302, 312) que l'utilisateur saisit.

8. Procédé selon la revendication 7, comprenant en outre l'étape de : (d) ajout de tout message supplémentaire envoyé à ou reçu depuis un numéro de téléphone ou un nom de groupe de gestion intégrée (302, 312) spécifique stocké dans la boîte de réception de messages (310) à l'historique précédent de messages envoyés à ou reçus depuis le numéro de téléphone ou le nom de groupe (302, 312) spécifique de sorte que tous les messages puissent être intégrés et fournis en sortie tous ensemble.

9. Procédé selon la revendication 7, dans lequel ladite étape (b) inclut : la détection du moment où l'utilisateur sélectionne deux numéros de téléphone ou plus ou un nom de groupe de gestion intégrée (302, 312) stocké dans la boîte de réception de messages (310) et appuie sur une touche pour envoyer un message texte saisi ; et l'envoi du message texte simultanément aux multiples destinataires des numéros de téléphone ou du nom de groupe de gestion intégrée (302, 312) sélectionnés.
